# EUROPÄISCHE PATENTANMELDUNG

(11) **EP 1 762 434 A2**
(43) Veröffentlichungstag der Anmeldung: **14.03.2007**
(21) Anmeldenummer: 06120064.8
(22) Anmeldetag: 04.09.2006
(51) Int. Cl.: B60R 1/04, B60R 1/12

(54) **Vorrichtung zur Befestigung eines Innenspiegels an einer Windschutzscheibe eines Kraftfahrzeugs und Innenspiegelanordnung**

(30) Priorität: 09.09.2005 DE 102005042961
(71) Anmelder: Hella KGaA Hueck & Co., 59552 Lippstadt (DE)
(72) Erfinder: Schäfer, Heiko, 59597, Erwitte (DE)

(57) **Zusammenfassung**

Vorrichtung (1) zur Befestigung eines Innenspiegels (2) an einer Windschutzscheibe (5) eines Kraftfahrzeugs, umfassend einen Spiegelfuß (3), der an einer Innenfläche (50) einer Windschutzscheibe (5) anbringbar ist, mindestens eine Sensoreinrichtung (4), die innerhalb des Spiegelfußes (3) untergebracht ist oder am Spiegelfuß (3) angebracht ist, geeignet, eine Befeuchtung einer Außenfläche (51) der Windschutzscheibe (5) zu erfassen, wobei die Sensoreinrichtung (4) für eine nicht-optische Erfassung der Befeuchtung der Außenfläche (51) der Windschutzscheibe (5) eingerichtet ist.

## Beschreibung

### STAND DER TECHNIK

Die vorliegende Erfindung betrifft eine Vorrichtung zur Befestigung eines Innenspiegels an einer Windschutzscheibe eines Kraftfahrzeugs nach dem Oberbegriff des Anspruchs 1. Darüber hinaus betrifft die vorliegende Erfindung eine Innenspiegelanordnung.

Eine Innenspiegelanordnung mit einer Vorrichtung der eingangs genannten Art ist aus der DE 100 60 446 B4 bekannt. Bei dieser Innenspiegelanordnung ist eine optische Sensoreinrichtung zur Erfassung der Befeuchtung der Außenfläche der Windschutzscheibe in einen Spiegelfuß integriert, der bei der Montage der Innenspiegelanordnung an einer Innenfläche der Windschutzscheibe eines Fahrzeugs befestigt wird.

Sensoreinrichtungen, die die Befeuchtung der Außenfläche der Windschutzscheibe des Kraftfahrzeugs sowie die Stärke des auf die Windschutzscheibe treffenden Niederschlags optisch erfassen können, müssen über geeignete Kopplungsmittel mit der Windschutzscheibe optisch gekoppelt sein. Beispielsweise werden bei den aus dem Stand der Technik bekannten Sensoreinrichtungen transparente Klebemittel oder transparente Gelkissen als optische Kopplungsmittel eingesetzt.

Es hat sich jedoch gezeigt, dass die optischen Kopplungsmittel relativ empfindlich sind. Daher ist die Montage der Vorrichtung beziehungsweise der Innenspiegelanordnung in Form eines vormontierten Moduls nicht zweckmäßig, da während der Montage die optischen Kopplungsmittel der Sensoreinrichtung unter Umständen verschmutzen oder beschädigt werden können und somit unbrauchbar werden.

Hier setzt die vorliegende Erfindung an.

Der vorliegenden Erfindung liegt die Aufgabe zugrunde, eine Vorrichtung zur Befestigung eines Innenspiegels an einer Windschutzscheibe eines Kraftfahrzeugs sowie eine Innenspiegelanordnung zur Verfügung zu stellen, die kostengünstig herstellbar sind und als vormontierte Module mit einem geringen Montageaufwand an der Windschutzscheibe des Kraftfahrzeugs angebracht werden können.

### VORTEILE DER ERFINDUNG

Diese Aufgabe wird hinsichtlich der Vorrichtung durch eine Vorrichtung mit den Merkmalen des Anspruchs 1 sowie hinsichtlich der Innenspiegelanordnung durch eine Innenspiegelanordnung mit den Merkmalen des Anspruchs 11 gelöst. Die Unteransprüche betreffen vorteilhafte Weiterbildungen der Erfindung.

Gemäß Anspruch 1 wird vorgeschlagen, dass die Sensoreinrichtung für eine nicht-optische Erfassung der Befeuchtung der Außenfläche der Windschutzscheibe eingerichtet ist. Somit kann auf optische Kopplungsmittel, wie zum Beispiel auf transparente Klebstoffe oder transparente Gelkissen, die bei den aus dem Stand der Technik bekannten Sensoreinrichtungen erforderlich sind, verzichtet werden. Die erfindungsgemäße Vorrichtung kann als vormontiertes Modul einfach und kostengünstig an der Windschutzscheibe montiert werden. Als zusätzliches Bauteil muss dann nur noch der Innenspiegel an der Vorrichtung angebracht werden.

In einer besonders bevorzugten Ausführungsform wird vorgeschlagen, dass die Sensoreinrichtung Mittel für eine kapazitive Erfassung der Befeuchtung der Außenfläche der Windschutzscheibe aufweist. Dadurch kann die Befeuchtung der Außenfläche der Windschutzscheibe beziehungsweise die Intensität des Niederschlags zuverlässig erfasst werden, so dass mit der Sensoreinrichtung gekoppelte Scheibenwischeinrichtungen automatisiert aktiviert beziehungsweise wieder deaktiviert werden können. An Stelle der vorgeschlagenen Mittel für eine kapazitive Erfassung der Befeuchtung der Außenfläche der Windschutzscheibe kann die Sensoreinrichtung auch andere Mittel für eine nicht-optische Erfassung der Befeuchtung der Außenfläche der Windschutzscheibe aufweisen.

Es besteht in einer vorteilhaften Ausführungsform die Möglichkeit, dass die Sensoreinrichtung über mindestens ein Halteelement im Spiegelfuß befestigt ist. Diese Maßnahme ermöglicht eine sichere Montage der Sensoreinrichtung im Spiegelfuß der Vorrichtung.

In einer bevorzugten Ausführungsform ist vorgesehen, dass das mindestens eine Halteelement im Wesentlichen starr ausgebildet ist.

In einer besonders bevorzugten Ausführungsform wird vorgeschlagen, dass das mindestens eine Halteelement zumindest abschnittsweise federnd ausgebildet ist. Diese Ausführungsform hat den Vorteil, dass eventuell auftretende Toleranzen, die zwischen dem Spiegelfuß und der Innenfläche der Windschutzscheibe auftreten können, auf einfache Weise kompensiert werden können. Ferner ermöglicht es das zumindest abschnittsweise federnd ausgebildete Halteelement, dass die Sensoreinrichtung nach der Montage durch die Federkraft an die Innenfläche der Windschutzscheibe gedrückt wird, so dass ein sicherer mechanischer Kontakt mit der Innenfläche der Windschutzscheibe hergestellt werden kann.

Gemäß einer vorteilhaften Weiterbildung weist die Sensoreinrichtung darüber hinaus Mittel zur Erfassung der Umgebungsausleuchtung des Kraftfahrzeugs auf. Dadurch kann die Funktion der Sensoreinrichtung auf einfache Art und Weise um eine sicherheits- und komfortrelevante Funktion erweitert werden. Die Mittel zur Erfassung der Umgebungsausleuchtung können bei entsprechender Aktivierung seitens des Fahrers des Kraftfahrzeugs die Kraftfahrzeugbeleuchtungseinrichtungen automatisch ein- beziehungsweise ausschalten, sofern es die äußeren Lichtverhältnisse erfordern.

Es kann in einer weiteren vorteilhaften Ausführungsform auch vorgesehen sein, dass die Sensoreinrichtung Mittel zur Erfassung der Sonneneinstrahlung umfasst. Dadurch kann die auf das Fahrzeug einwirkende Sonneneinstrahlung erfasst werden, so dass eine Klimatisierungseinrichtung des Kraftfahrzeugs in Abhängigkeit von der Sonneneinstrahlung aktiviert beziehungsweise wieder deaktiviert werden kann.

Es besteht ferner die Möglichkeit, dass die Sensoreinrichtung Mittel zur Erfassung der Befeuchtung der Innenfläche der Windschutzscheibe aufweist. Dadurch kann insbesondere ein Beschlagen der Innenfläche der Windschutzscheibe erfasst werden. Lüftungseinrichtungen des Kraftfahrzeugs, die mit der Sensoreinrichtung gekoppelt sind, können automatisiert aktiviert beziehungsweise wieder deaktiviert werden.

In einer bevorzugten Ausführungsform ist vorgesehen, dass der Spiegelfuß mindestens einen Aufnahmeabschnitt aufweist, geeignet, mindestens ein Befestigungsmittel, das an der Innenfläche der Windschutzscheibe angebracht ist, bei der Montage aufzunehmen. Dadurch kann die Montage der Vorrichtung weiter vereinfacht werden. Bei der Montage müssen somit nur noch die Befestigungsmittel, die bereits herstellerseitig an der Innenfläche der Windschutzscheibe vormontiert sein können, mit den entsprechenden Aufnahmeabschnitten in Eingriff gebracht werden, so dass eine schnelle und damit kostengünstige Montage der Vorrichtung möglich ist. Beispielsweise können die Befestigungsmittel einfach in die Aufnahmeabschnitte einrasten.

In einer vorteilhaften Ausführungsform wird vorgeschlagen, dass die Vorrichtung weitere elektrische Einrichtungen, die innerhalb des Spiegelfußes untergebracht oder am Spiegelfuß angebracht sind, und ein elektrisches Steckverbindungsmittel, geeignet für eine gemeinsame elektrische Kontaktierung der Sensoreinrichtung und der elektrischen Einrichtungen aufweist. Die weiteren elektrischen Einrichtungen können zum Beispiel einen elektrochromen Innenspiegel, eine Empfangsantenne, eine Kompasseinrichtung oder dergleichen umfassen. Durch die gemeinsame elektrische Kontaktierung der Sensoreinrichtung mit weiteren elektrischen Einrichtungen über das gemeinsame Steckverbindungsmittel kann der Aufwand für die elektrische Kontaktierung während der Montage der Vorrichtung verringert werden.

Gemäß Anspruch 11 umfasst eine erfindungsgemäße Innenspiegelanordnung, die zur Montage an einer Innenfläche einer Windschutzscheibe eines Kraftfahrzeugs geeignet ist, eine Vorrichtung nach einem der Ansprüche 1 bis 10 und einen Innenspiegel, der an einem Spiegelfuß der Vorrichtung angebracht ist.

Die erfindungsgemäße Innenspiegelanordnung kann somit als komplett vormontiertes Modul schnell und kostengünstig an der Innenfläche der Windschutzscheibe montiert werden.

### ZEICHNUNGEN

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: eine schematisch vereinfachte, teilweise geschnittene Seitenansicht einer erfindungsgemäßen Innenspiegelanordnung bei der Montage an einer Windschutzscheibe eines Kraftfahrzeugs;
- Fig. 2: eine schematisch vereinfachte Seitenansicht der Innenspiegelanordnung gemäß Fig. 1 nach der Montage.

### BESCHREIBUNG DES AUSFÜHRUNGSBEISPIELS

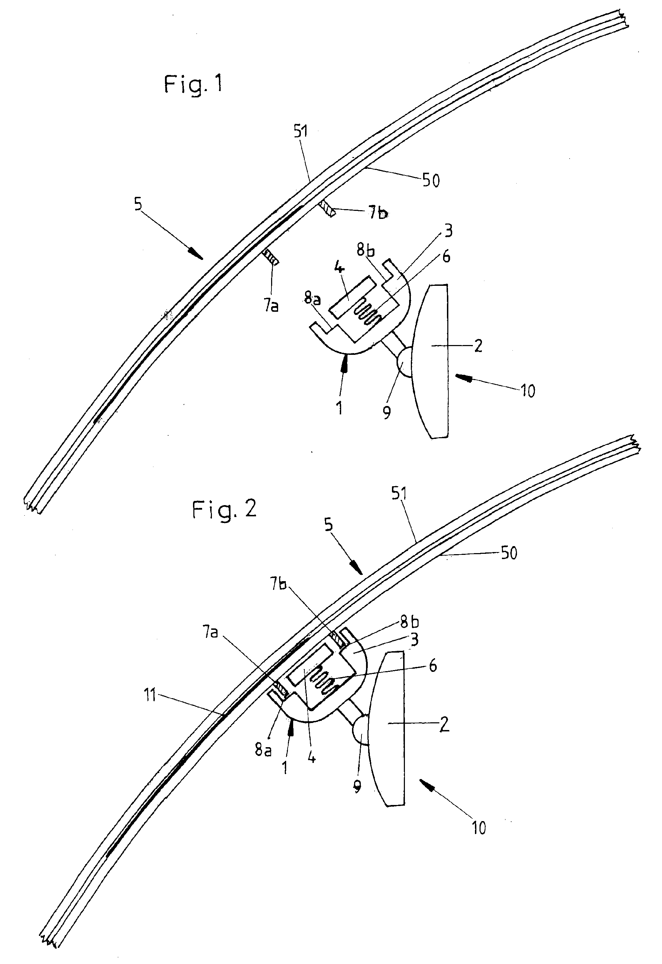

Eine erfindungsgemäße Innenspiegelanordnung 10, die in Fig. 1 und 2 während beziehungsweise nach der Montage schematisch stark vereinfacht dargestellt ist, weist eine Vorrichtung 1 zur Befestigung eines Innenspiegels 2 an einer Windschutzscheibe 5 eines Kraftfahrzeugs sowie einen entsprechenden Innenspiegel 2 auf.

Die Vorrichtung 1 weist einen Spiegelfuß 3 auf, an dem der Innenspiegel 2 angebracht ist. Der Innenspiegel 2 ist in diesem Ausführungsbeispiel über ein Gelenk 9, das vorzugsweise ein Kugelgelenk ist, relativ zum Spiegelfuß 3 verschwenkbar und kann somit von einem Benutzer individuell eingestellt werden.

Der Spiegelfuß 3 weist in diesem Ausführungsbeispiel einen Hohlraum 30 auf, in dem eine Sensoreinrichtung 4 untergebracht ist, die für eine nicht-optische Erfassung der Befeuchtung einer Außenfläche 51 der Windschutzscheibe 5 eingerichtet ist. Es besteht alternativ auch die Möglichkeit, dass die Sensoreinrichtung 4 außen am Spiegelfuß 3 angebracht ist. Die Sensoreinrichtung 4 ist vorzugsweise in einem eigenen Gehäuse untergebracht und weist in diesem Ausführungsbeispiel Mittel zur kapazitiven Erfassung der Befeuchtung der Außenfläche 51 der Windschutzscheibe 5 beziehungsweise der Intensität des auf die Außenfläche 51 der Windschutzscheibe 5 treffenden Niederschlags auf. Das bedeutet, dass gemäß der vorliegenden Erfindung keine optischen Kopplungsmittel erforderlich sind, um die Sensoreinrichtung 4 optisch mit der Windschutzscheibe 5 zu koppeln. Der Wegfall der empfindlichen optischen Kopplungsmittel ermöglicht eine Herstellung der Innenspiegelanordnung 10 beziehungsweise der Vorrichtung 1 als robuste, vormontierte Module, die schnell und damit kostengünstig an der Windschutzscheibe 5 des Kraftfahrzeugs montiert werden können.

Die Sensoreinrichtung 4 ist in diesem Ausführungsbeispiel über ein Halteelement 6 mit dem Spiegelfuß 3 verbunden. Man erkennt, dass das Halteelement 6 in diesem Ausführungsbeispiel federnd ausgebildet ist. Das Halteelement 6 wird während der Montage des Spiegelfußes 3 an der Innenfläche 50 der Windschutzscheibe 5 etwas zusammengedrückt. Die daraus resultierende Rückstellkraft drückt die Sensoreinrichtung 4 auf die Innenfläche 50 der Windschutzscheibe 5. In einer alternativen Ausführungsform, die hier nicht explizit gezeigt ist, besteht auch die Möglichkeit, dass das Halteelement 6 starr ausgebildet ist.

Damit der Spiegelfuß 3 der Vorrichtung 1 an der Innenfläche 50 der Windschutzscheibe 5 sicher montiert werden kann, sind an der Windschutzscheibe 5 Befestigungsmittel 7a, 7b vorgesehen, die vorzugsweise an der Windschutzscheibe 5 vormontiert sind. Der Spiegelfuß 3 weist zu den Befestigungsmitteln 7a, 7b korrespondierende Aufnahmeabschnitte 8a, 8b auf. Die Befestigungsmittel 7a, 7b können bei der Montage der Vorrichtung 1 in die Aufnahmeabschnitte 8a, 8b eingreifen, so dass eine sichere Befestigung des Spiegelfußes 3 an der Windschutzscheibe 5 hergestellt werden kann. Beispielsweise können die Befestigungsmittel 7a, 7b und die korrespondierenden Aufnahmeabschnitte 8a, 8b zur Bereitstellung einer Rastverbindung eingerichtet sein.

Man erkennt in Fig. 1 und Fig. 2 ferner, dass in der Windschutzscheibe 5, die vorzugsweise als Verbundglasscheibe ausgeführt ist, ein Antennenmittel 11 angeordnet ist, das beim Betrieb der Sensoreinrichtung 4 für die kapazitive Erfassung der Befeuchtung der Außenfläche 51 der Windschutzscheibe 5 benötigt wird.

Die Sensoreinrichtung 4 kann zusätzlich zu den Mitteln zur kapazitiven Erfassung der Befeuchtung der Windschutzscheibe 5 darüber hinaus auch Mittel zur Erfassung der Umgebungsbeleuchtung des Kraftfahrzeugs umfassen. Diese Mittel zur Erfassung der Umgebungsbeleuchtung des Kraftfahrzeugs können beispielsweise das Umgebungslicht sowie die Vorfeldbeleuchtung des Kraftfahrzeugs erfassen.
Dadurch können unterschiedliche Lichtverhältnisse bei Tag, während der Dämmerung oder bei Nacht beziehungsweise bei Tunnel- oder Brückendurchfahrten des Kraftfahrzeugs erfasst werden, so dass eine Kraftfahrzeugbeleuchtungseinrichtung, die in an sich bekannter Weise mit der Sensoreinrichtung 4 gekoppelt ist, automatisch eingeschaltet beziehungsweise wieder ausgeschaltet werden kann.

Es besteht alternativ oder zusätzlich die Möglichkeit, dass die Sensoreinrichtung 4 darüber hinaus auch Mittel zur Erfassung der Sonneneinstrahlung und/oder Mittel zur Erfassung der Befeuchtung der Innenfläche 50 der Windschutzscheibe 5 umfassen.

Die Mittel zur Erfassung der Sonneneinstrahlung dienen dazu, die auf das Kraftfahrzeug einwirkende Sonnenstrahlung zu erfassen, so dass bei starker Sonneneinstrahlung zum Beispiel eine Klimatisierungseinrichtung des Kraftfahrzeugs, die mit der Sensoreinrichtung gekoppelt ist, aktiviert werden kann.

Die Mittel zur Erfassung der Befeuchtung der Innenfläche 50 der Windschutzscheibe 5 können eine Feuchtigkeitsbildung und damit einen Beschlag auf der Innenfläche 50 der Windschutzscheibe erfassen und zum Beispiel eine Lüftungseinrichtung des Kraftfahrzeugs aktivieren beziehungsweise wieder deaktivieren.

Es besteht grundsätzlich die Möglichkeit, die Sensoreinrichtung 4 mit weiteren, hier nicht explizit gezeigten sicherheits- und/oder komfortrelevanten Sensormitteln auszustatten.

Es besteht ferner die Möglichkeit, nur die erfindungsgemäße Vorrichtung 1 als vormontiertes Modul auszuführen. Dann kann vor oder nach der Montage der Vorrichtung 1 an der Windschutzscheibe 5 der Innenspiegel 2 am Spiegelfuß 3 der Vorrichtung 1 angebracht werden.

Mit Hilfe der vorliegenden Erfindung wird eine Vorrichtung zur Befestigung eines Innenspiegels 1 an der Innenfläche 50 der Windschutzscheibe 5 beziehungsweise eine Innenspiegelanordnung 10 zur Verfügung gestellt, die als vormontierte Module einfach und kostengünstig an der Innenfläche 50 der Windschutzscheibe 5 eines Kraftfahrzeugs montiert werden können.

## Patentansprüche

1. Vorrichtung (1) zur Befestigung eines Innenspiegels (2) an einer Windschutzscheibe (5) eines Kraftfahrzeugs, umfassend:
- einen Spiegelfuß (3), der an einer Innenfläche (50) der Windschutzscheibe (5) anbringbar ist;
- mindestens eine Sensoreinrichtung (4), die innerhalb des Spiegelfußes (3) untergebracht oder am Spiegelfuß (3) angebracht ist, geeignet, eine Befeuchtung einer Außenfläche (51) der Windschutzscheibe (5) zu erfassen;
**dadurch gekennzeichnet, dass** die Sensoreinrichtung (4) für eine nicht-optische Erfassung der Befeuchtung der Außenfläche (51) der Windschutzscheibe (5) eingerichtet ist.

2. Vorrichtung (1) nach Anspruch 1, **dadurch gekennzeichnet, dass** die Sensoreinrichtung (4) Mittel für eine kapazitive Erfassung der Befeuchtung der Außenfläche (51) der Windschutzscheibe (5) aufweist.

3. Vorrichtung (1) nach einem der Ansprüche 1 oder 2, **dadurch gekennzeichnet, dass** die Sensoreinrichtung (4) über mindestens ein Halteelement (6) im Spiegelfuß (3) befestigt ist.

4. Vorrichtung (1) nach Anspruch 3, **dadurch gekennzeichnet, dass** das mindestens eine Halteelement (6) im Wesentlichen starr ausgebildet ist.

5. Vorrichtung (1) nach einem der Ansprüche 3 oder 4, **dadurch gekennzeichnet, dass** das mindestens eine Halteelement (6) zumindest abschnittsweise federnd ausgebildet ist.

6. Vorrichtung (1) nach einem der Ansprüche 1 bis 5, **dadurch gekennzeichnet, dass** die Sensoreinrichtung (4) darüber hinaus Mittel zur Erfassung der Umgebungsausleuchtung des Kraftfahrzeugs aufweist.

7. Vorrichtung (1) nach einem der Ansprüche 1 bis 6, **dadurch gekennzeichnet, dass** die Sensoreinrichtung (4) Mittel zur Erfassung der Sonneneinstrahlung umfasst.

8. Vorrichtung (1) nach einem der Ansprüche 1 bis 7, **dadurch gekennzeichnet, dass** die Sensoreinrichtung (4) Mittel zur Erfassung der Befeuchtung der Innenfläche (50) der Windschutzscheibe (5) aufweist.

9. Vorrichtung (1) nach einem der Ansprüche 1 bis 8, **dadurch gekennzeichnet, dass** der Spiegelfuß (2) mindestens einen Aufnahmeabschnitt (8a, 8b) aufweist, geeignet, mindestens ein Befestigungsmittel (7a, 7b), das an der Innenfläche (50) der Windschutzscheibe (5) angebracht ist, bei der Montage aufzunehmen.

10. Vorrichtung (1) nach einem der Ansprüche 1 bis 9, **dadurch gekennzeichnet, dass** die Vorrichtung (1) weitere elektrische Einrichtungen, die innerhalb des Spiegelfußes (3) untergebracht oder am Spiegelfuß (3) angebracht sind, und ein elektrisches Steckverbindungsmittel, geeignet für eine gemeinsame elektrische Kontaktierung der Sensoreinrichtung (4) und der elektrischen Einrichtungen aufweist.

11. Innenspiegelanordnung (10), geeignet zur Montage an einer Innenfläche (50) einer Windschutzscheibe (5) eines Kraftfahrzeugs, umfassend eine Vorrichtung (1) nach einem der Ansprüche 1 bis 10 und einen Innenspiegel (2), der am Spiegelfuß (3) der Vorrichtung (1) angebracht ist.
